## Europäisches Patentamt
## European Patent Office
## Office européen des brevets

(19)

(11) Veröffentlichungsnummer: **0 214 452**
**B1**

(12) # EUROPÄISCHE PATENTSCHRIFT

(45) Veröffentlichungstag der Patentschrift:
06.12.89

(51) Int. Cl.⁴: **B 65 H 75/40**

(21) Anmeldenummer: 86110617.7

(22) Anmeldetag: 31.07.86

(54) **Insbesondere tragbare Trommel zur Aufnahme einer biegbaren Medium- bzw. Energieleitung wie Druckluftschlauch, Wasserschlauch, Elektrokabel od. dgl.**

(30) Priorität: 12.09.85 DE 3532511

(43) Veröffentlichungstag der Anmeldung:
18.03.87 Patentblatt 87/12

(45) Bekanntmachung des Hinweises auf die Patenterteilung:
06.12.89 Patentblatt 89/49

(84) Benannte Vertragsstaaten:
AT BE CH FR GB IT LI NL

(56) Entgegenhaltungen:
EP-A-0 149 072
DE-A-3 337 344
DE-B-1 774 558
GB-A-1 311 567
US-A-3 709 252
US-A-4 512 361

(73) Patentinhaber: Hugo Brennenstuhl GmbH & Co. KG, Seestrasse 1 - 3, D-7400 Tübingen - 9 (Pfrondorf) (DE)

(72) Erfinder: Brennenstuhl, Hugo, Albstrasse 24, D-7400 Tübingen 9 (DE)

(74) Vertreter: Reimold, Otto, Dr. Dipl.- Phys., Patentanwälte Dipl.- Ing. R. Magenbauer Dipl.- Phys. Dr. O. Reimold Dipl.- Phys.Dr. H. Vetter Hölderlinweg 58, D-7300 Esslingen (DE)

EP 0 214 452 B1

## Beschreibung

Die Erfindung betrifft eine insbesondere tragbare Trommel zum Aufwickeln einer flexiblen Wickelleitung wie Druckluftschlauch, Wasserschlauch, Elektrokabel od.dgl., mit einem einen Trommelkern und seitliche Flansche aufweisenden, drehbar und axial unverschiebbar gelagerten Trommelkörper, der einen von dem Trommelkern und den Flanschen begrenzten Wickelraum zur Aufnahme der Wickelleitung bildet, und mit einem ein gebogenes Rohr aufweisenden Trommelgestell, von dem eine den Trommelkörper lagernde, hohl ausgebildete Lagerachse absteht, an deren dem Trommelgestell abgewandtem Ende eine Leitungskupplung angeordnet ist, die zwei miteinander verbundene, um eine im wesentlichen parallel zur Lagerachse verlaufende Drehachse einander gegenüber verdrehbare Kupplungshälften aufweist, deren eine Kupplungshälfte der Lagerachse gegenüber unverdrehbar angeordnet und über die Lagerachse mit einer Anschlußleitung verbindbar ist und deren andere Kupplungshälfte an die Wickelleitung angeschlossen ist.

Derartige Trommeln werden insbesondere dann eingesetzt, wenn Arbeiten durchzuführen sind, die während des Arbeitsvorganges eine variable Länge der das betreffende Medium oder den elektrischen Strom führenden Leitung benötigt wird. Die auf den Trommelkörper aufgewickelte Leitung läßt sich der gewünschten Länge entsprechend einfach abziehen, wobei sich der Trommelkörper auf der Lagerachse dreht. Anwendungsgebiete sind beispielsweise das Gartengießen mittels eines Wasserschlauches, das Ausführen von Arbeiten mit Hilfe von über einen Schlauch herangeführter Druckluft usw.

Aus der GB-A-1 311 567 ist eine Trommel der eingangs genannten Art bekannt. Bei dieser bekannten Trommel ist an das eine Ende des das Trommelgestell bildenden Rohres seitlich ein Stutzen angeschweißt, der einerseits die rohrförmige Lagerachse hält und an dem andererseits eine von einem Versorgungsnetz für Wasser, Druckluft od.dgl. herkommende Anschlußleitung befestigbar ist, so daß das betreffende Medium durch den Stutzen, die Lagerachse und die Leitungskupplung zur Wickelleitung strömen kann. Wird die Wickelleitung vom Trommelkörper abgezogen, macht die an die Wickelleitung angeschlossene Kupplungshälfte die Drehbewegung des Trommelkörpers mit, so daß keine Verdrillungen auftreten.

Bei der bekannten Trommel ist vor allem die aufwendige Herstellung nachteilig. Das Trommelgestell, die Lagerachse und der diese verbindende Stutzen sind gesondert zu fertigende Bauteile, deren Montage mehrere Verfahrensschritte erfordert. Außerdem ist die Anschlußstelle der Anschlußleitung durch den Ort der Lagerachse bzw. des diese haltenden Stutzens fest vorgegeben, was aus Platzgründen ungünstig sein kann. Ferner besteht bei nicht sorgfältigem Anschweißen des Stutzens und somit der Lagerachse an das Trommelgestell die Gefahr, daß die Schweißstelle reißt. Dabei ist zu berücksichtigen, daß solche Trommeln in der Praxis nicht sehr sorgfältig behandelt werden und, beispielsweise wenn man sie fallen läßt, Stößen und Schlägen ausgesetzt sein kann.

Der vorliegenden Erfindung liegt deshalb die Aufgabe zugrunde, eine Trommel der eingangs genannten Art zu schaffen, die bei stabilem Aufbau einfacher und kostengünstig herzustellen ist und bei der der Ort der Anschlußstelle für die Anschlußleitung variabler als seither ist.

Diese Aufgabe wird erfindungsgemäß dadurch gelöst, daß die Lagerachse ein einstückig abgebogenes Rohrstück des Trommelgestells ist und daß das das Trommelgestell einschließlich der Lagerachse bildende Rohr einen durchgehenden Rohrkanal bildet, wobei die Anschlußleitung entweder an das der Leitungskupplung entgegengesetzte, als Anschlußende ausgebildete Rohrende anschließbar ist oder von diesem Rohrende her in den Rohrkanal bis zur Leitungskupplung eingesteckt und an diese angeschlossen ist.

Auf diese Weise wird die Lagerachse durch einen einfachen Biegevorgang an das Trommelgestell angeformt, der gleichzeitig mit dem sonstigen Biegen des Trommelgestells durchgeführt werden kann. Dies reduziert die Fertigungskosten und -zeiten beträchtlich. Außerdem ergibt sich eine größtmögliche Stabilität. Ferner wird die Druckluft, das Wasser, der elektrische Strom od.dgl. durch das Trommelgestell hindurch zugeführt, wobei man das als Anschlußende auseildete Rohrende in eine beliebige Richtung biegen kann, so daß eine Anpassung an die örtlichen Gegebenheiten möglich ist, beispielsweise wenn es sich um eine Trommel handelt, die seitlich an eine Gebäudewand od.dgl. anhängbar ist.

Aus der EP-A-149 072 ist zwar eine Trommel bekannt, bei der die Lagerachse ein einstückig abgebogenes Rohrstück des Trommelgestells ist. Es handelt sich hier jedoch um eine ansonsten anders geartete Kabeltrommel für ein Elektrokabel, bei der das Trommelgestell nicht an der Stromzufuhr beteiligt ist. Das auf den Trommelkörper aufgewickelte, an das elektrische Versorgungsnetz anschließbare Elektrokabel ist vielmehr mit einer am Trommelkern sitzenden Steckdoseneinrichtung verbunden, an die irgend welche elektrischen Geräte anschließbar sind.

Zweckmäßige Ausgestaltungen der Erfindung sind in den Unteransprüchen angegeben.

Ausführungsbeispiele der Erfindung werden nun anhand der Zeichnung im einzelnen beschrieben. Es zeigen.

Fig. 1  eine erste Ausführungsform der erfindungsgemäßen Trommel in Seitenansicht und teilweise geschnitten,

Fig. 2  die Trommel nach Fig. 1 in Rückansicht gemäß Pfeil II in Fig. 1,

Fig. 3 eine zweite Ausführungsform der erfindungsgemäßen Trommel in der Fig. 1 entsprechender Ansicht, wobei das Trommelgestell weggeschnitten ist, und

Fig. 4 eine dritte Ausführungsform der erfindungsgemäßen Trommel für ein Elektrokabel, wobei nur der eine Schleifringkupplung als Leitungskupplung enthaltende Trommelkörperbereich dargestellt ist.

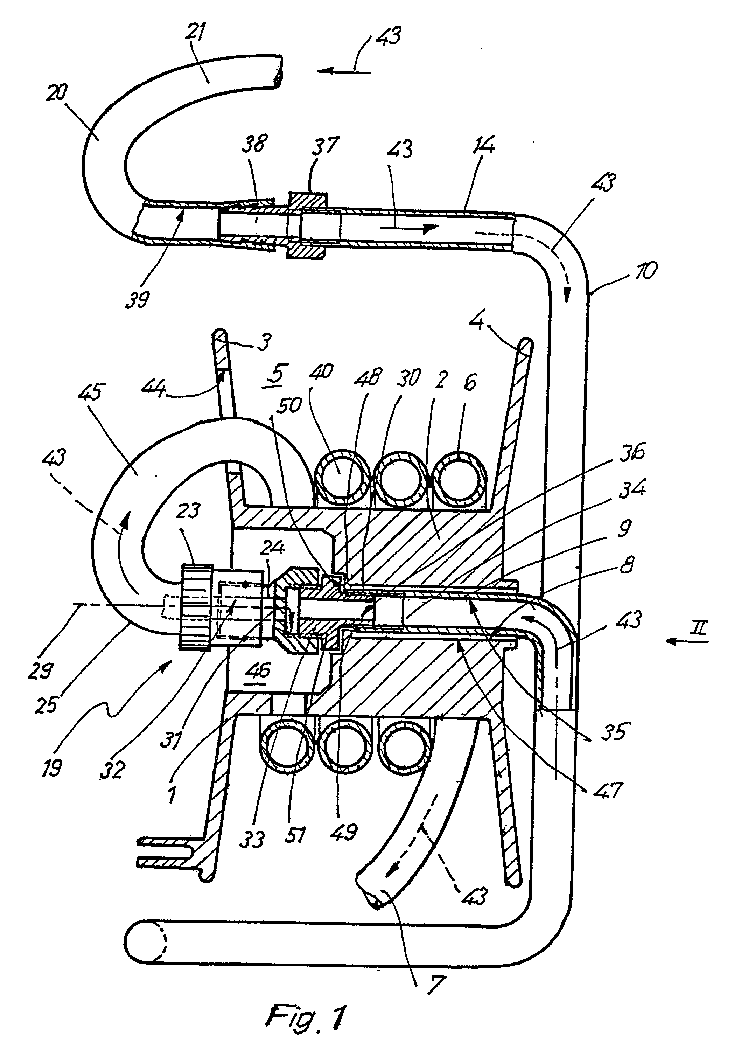

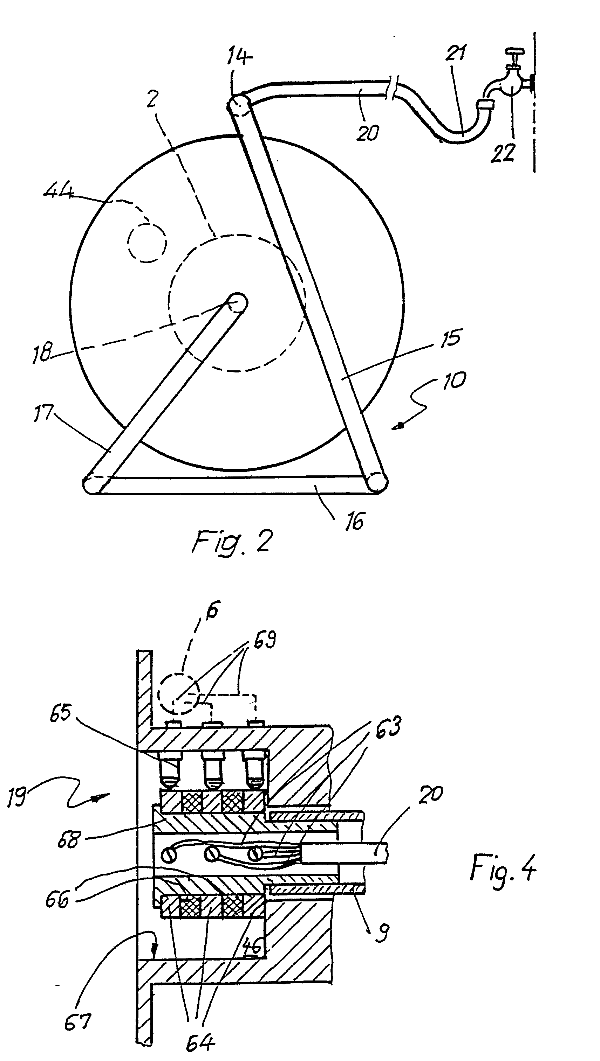

Die aus den Fig. 1 und 2 hervorgehende Trommel weist einen aus Kunststoff bestehenden Trommelkörper 1 auf, der sich aus einem zylindrischen Trommelkern 2 und seitlichen Flanschen 3,4 ringförmiger Gestalt zusammensetzt, die im Bereich der axialen Stirnseiten des Trommelkerns 2 einstückig an diesen angeformt sind. Die im wesentlichen radial abstehenden und leicht kegelig nach axial außen gestellten Flansche 3,4 bilden eine seitliche Begrenzung für einen Wickelraum 5, der radial innen vom Trommelkernumfang begrenzt wird. Auf den Trommelkern 2 ist innerhalb des Wickelraums 5 eine Wickelleitung 6 aufgewickelt, die hier von einem Schlauch, beispielsweise ein Wasserschlauch oder ein Druckluftschlauch, gebildet wird. Die Wickelleitung 6 kann vom Trommelkörper abgewickelt werden, so daß ihr äußeres Ende 7 zu einem nicht dargestellten Arbeitsgerät, beispielsweise zu einer Spritzdüse, zu einem Rasensprenger oder zu einer Druckluftpistole führt.

Der Trommelkern 2 besitzt eine koaxiale, durchgehende Lagerbohrung 8, mit der der Trommelkörper 1 drehbar und axial unverschieblich auf einer Lagerachse 9 sitzt, die einstückig mit einem Trommelgestell 10 ausgebildet ist, das zum Stellen, Aufhängen oder Tragen der Trommel dient.

Das Trommelgestell 10 mit der Lagerachse 9 besteht aus rohrförmigem Material, z. B. aus einem Metallrohr. Dabei ist das Trommelgestell 10 ein Biegeteil. Es besitzt einen vom einen Endbereich des Rohres gebildeten Handgriff 14, der sich oberhalb des Trommelkörpers 1 parallel zu dessen axialer Richtung erstreckt. Von dem den Handgriff 14 bildenden Endbereich des Rohres geht eine Verbindungspartie 15 rechtwinkelig zum Trommelkörper 1 hin ab, die der zugewandten Seite des Trommelkörpers 1 vorgelagert ist und dieser entlang in Sekantenrichtung nach unten verläuft, wo sie den Trommelkörper 1 überragt. An diese Verbindungspartie 15 ist eine rechtwinkelig zu ihr stehende und parallel zum Handgriff 14 gerichtete U-förmige Partie 16 angebogen. Vom entgegengesetzten Ende der U-förmigen Partie 16 ist eine in Seitenansicht (Fig. 1) in der Ebene der Verbindungspartie 15 verlaufende, sich in radialer Richtung des Trommelkerns 2 erstreckende radiale Rohrpartie 17 rechtwinkelig abgebogen, die am Zentrum des Trommelkörpers 1 endet. Auf diese radiale Rohrpartie 17 folgt dann ein einstückig abgebogenes Rohrstück 18, das die Lagerachse 9 bildet.

Am dem Trommelgestell 10 abgewandten Ende der Lagerachse 9 ist eine Leitungskupplung 19 angeordnet, die zwei unter Abdichtung lösbar und drehbar miteinander verbundene und insbesondere als Schnellkupplungshälften ausgebildete Kupplungshälften 23, 24 besitzt. Hiervon ist die Kupplungshälfte 23 unmittelbar am inneren Ende 25 der Wickelleitung 6 angebracht, während die Kupplungshälfte 24 der Lagerachse 9 zugeordnet und dieser gegenüber unverdrehbar und eventuell leicht nachgiebig festgelegt ist. Die Drehachse 29, um die die fest mit der Wickelleitung 6 verbundene Kupplungshälfte 23 gegenüber der bezüglich der Lagerachse 9 feststehenden Kupplungshälfte 24 verdrehbar ist, verläuft parallel zur Achsrichtung der Lagerachse 9 und fällt vorzugsweise mit dieser zusammen.

Gemäß Fig. 1 ist die der Lagerachse 9 zugewandte Kupplungshälfte 24 an ihrer der anderen Kupplungshälfte 23 entgegengesetzten Seite unter koaxialer Ausrichtung fest mit der Lagerachse 9 verschraubt. Zu diesem Zwecke besitzt sie einen mit einem Innengewinde versehenen erweiterten Abschnitt 31 ihrer Durchgangsbohrung 32, in die ein mit komplementärem Gewinde ausgebildeter Verbindungsnippel 33 eingeschraubt ist, der an seinem anderen Ende einen koaxialen, mit Außengewinde versehenen Gewindefortsatz 34 trägt. Der Verbindungsnippel 33 ist mit seinem Gewindefortsatz 34 von der Stirnseite 30 der Lagerachse 9 her eingeschraubt, deren Rohrkanal 35 hierzu mit einem Innengewinde versehen ist. Der Verbindungsnippel 33 besitzt einen Durchgangskanal 36, über den der Rohrkanal 35 der Lagerachse 9 mit der Durchgangsbohrung 32 der Kupplungshälfte 24 verbunden ist. Die Durchgangsbohrung 32, der Rohrkanal 35 und der Durchgangskanal 36 sind koaxial zueinander angeordnet. Sämtliche Anschlußstellen sind gasdicht verschlossen, was durch nicht näher dargestellte Dichtungen od.dgl. erfolgt.

Es versteht sich, daß die Leitungskupplung 19 auch eine andere Form und Ausgestaltung besitzen kann, sie muß lediglich die schon genannte Bedingung der Drehbarkeit erfüllen. Insbesondere besteht die Möglichkeit, handelsübliche Schnellkupplungen aus dem Bereich des Gartenbaus zu verwenden.

Anstelle des Zwischenschaltens des Verbindungsnippels 33 könnte auch unmittelbar an die Kupplungshälfte 24 ein Anschlußstutzen, beispielsweise ein Gewindestutzen, angeformt sein, mit dem die Kupplungshälfte 24 unmittelbar in oder auf die Lagerachse ein- bzw. aufgeschraubt werden kann. Auch wäre es denkbar, die Kupplungshälfte 24 unmittelbar einstückig an die Lagerachse anzuformen, beispielsweise bei einem aus Kunststoff bestehenden Trommelgestell.

Da die Lagerachse 9 einstückig vom das Trommelgestell bildenden Rohr abgebogen ist, setzt sich der Rohrkanal 35 der Lagerachse 9 im Trommelgestel fort, so daß sich ein bis zum der Leitungskupplung 19 entgegengesetzten und beim Ausführungsbeispiel als Handgriff 14 ausgebildeten Endbereich des Trommelgestells 10 durchgehender Rohrkanal 35 ergibt. Über diesen durchgehenden Rohrkanal 35 und die Leitungskupplung 19 ist das innere Ende 25 der Wickelleitung 6 mit einer einen Leitungskanal 39 enthaltenden Anschlußleitung 20 verbunden, die zweckmäßigerweise der Wickelleitung 6 entsprechend ausgebildet ist. Der dem Trommelgestell 10 entgegengesetzte Endbereich 21 der Anschlußleitung 20 ist über einen Absperrhahn 22 mit einem nicht dargestellten Wasserversorgungsnetz verbunden, an dessen Stelle es sich auch um eine Druckquelle handeln könnte.

Das freie Ende des den Handgriff 14 bildenden Endbereichs des Trommelgestells 10 ist mit einem Gewinde versehen, auf das ein Schlauchanschlußstutzen 37 unter Abdichtung aufgeschraubt ist, der einen vom Handgriff 14 koaxial wegragenden Aufsteckstutzen 38 besitzt, auf den die Anschlußleitung 20 lösbar aufgesteckt ist. Das betreffende Medium, im vorliegenden Falle Wasser oder Druckluft, durchströmt also, ausgehend vom Absperrhahn 22, die Anschlußleitung 20, den Schlauchanschlußstutzen 37, den durchgehenden Rohrkanal 35 des Trommelgestells 10 und der Lagerachse 9, den Verbindungsnippel 33, die Leitungskupplung 19 und die Wickelleitung 6 bzw. deren Leitungskanal 40, so daß das Medium auf diesem, durch die Pfeile 43 angegebenen Weg zum an das äußere Ende 7 der Wickelleitung 6 angeschlossenen Gerät gelangt.

Die Trommel kann von der Anschlußleitung 20 leicht abgenommen und separat transportiert werden. Durch Verwendung einer Anschlußleitung 20 beliebiger Länge kann die Trommel entsprechend weit entfernt von dem Versorgungsnetz für das Wasser, die Druckluft od.dgl. aufgestellt werden.

Der vom Trommelgestell 10 weg gerichtete Trommelkörperflansch 3 besitzt eine kreisförmige Durchgangsöffnung 44, durch die die Wickelleitung 6 auf ihrem Wege von der Leitungskupplung 19 zum Wickelraum 5 hindurchgeführt ist. Hierdurch wird ein knickfreier Leitungsverlauf erreicht, da die Leitung 6 in axialer Richtung von der Leitungskupplung 19 abgehen und ihr anschließender Leitungsabschnitt 45 bogenförmig verlaufen kann, bevor sie in den Wickelraum 5 gelangt. Dies ist besonders dann wichtig, wenn die Wickelleitung 6 zum Transport von Flüssigkeiten, Gasen oder anderen fließfähigen Stoffen dient, da hier im Falle eines Abknickens der Leitung der Strömungsweg verschlossen werden würde. Auch bei Leitungen 6 mit großem Durchmesser und relativ geringer Wandstärke sollte eine knickfreie Leitungsführung vorhanden sein.

Wird zum Abwickeln der Wickelleitung 6 vom Trommelkörper 1 am äußeren Ende 7 der Wickelleitung 6 gezogen, dreht sich der Trommelkörper 1 um die Lagerachse 9. Ferner dreht sich die Kupplungshälfte 23 um die Drehachse 29 gegenüber der an der Lagerachse 9 befestigten Kupplungshälfte 24. Da der Leitungsabschnitt 45 zwischen der Leitungskupplung 19 und dem Wickelraum 5 verhältnismäßig kurz ist, besitzt dieser Leitungsabschnitt 45 eine gewisse Steifheit, so daß er sich beim Übertragen des Drehmomentes auf die Kupplungshälfte 23 nicht verdrillt.

Um zu verhindern, daß das Trommelgestell 10 beim Durchströmen von aggressiven Medien oder im Falle von Druckluft durch das entstehende Kondenzwasser korrodiert, kann das Trommelgestell aus nicht rostendem Material, z. B. aus Edelstahl bestehen. Man kann jedoch auch den Rohrkanal 35 mit einer Schutzschicht auskleiden, beispielsweise durch Verzinken oder indem der durchgehende Rohrkanal 35 über seine gesamte Länge von einem aus biegbarem Material bestehenden Schlauch durchzogen ist, der bereits vor dem Biegen des Gestells 10 in dessen Rohrkanal 35 eingesteckt und zusammen mit dem Gestell 10 gebogen wird.

Um die Baubreite der Trommel zu begrenzen, ist die Leitungskupplung 19 weitestgehend versenkt im Inneren des Trommelkerns 2 angeordnet. Zu diesem Zwecke besitzt der Trommelkern 2 an seiner dem Trommelgestell 10 abgewandten Seite einen sich von dieser Stirnseite in den Trommelkern 2 hinein erstreckenden zylindrischen Aufnahmeraum 46, dessen Durchmesser größer als der Durchmesser der Leitungskupplung 19 ist, so daß die Montage der Leitungskupplung 19 mühelos erfolgen kann. Bei Verwendung handelsüblicher Trommelkörper wird der Aufnahmeraum 46 von dem bereits vorhandenen Aufnahmeraum für elektrische Anschlußteile wie Steckdosen od.dgl. gebildet.

Die Lagerachse 9 endet mit axialem Abstand vor dem Aufnahmeraum 46. Dabei ist die die Lagerachse 9 aufnehmende Lagerbohrung 8 in eine dem Trommelgestell 10 zugewandte Partie 47 größeren Durchmessers und in eine sich zum Aufnahmeraum 46 hin anschließende Partie 48 kleineren Durchmessers unterteilt, die über einen radialen Ringabsatz 49 voneinander getrennt sind. Der Trommelkörper 1 ist mit der Partie 47 der Lagerbohrung 8 mit Drehspiel auf die Lagerachse 9 aufgesteckt, die mit ihrem Ende 30 am Ringabsatz 49 anliegt. Der Verbindungsnippel 33 sichert den Trommelkörper 1 gegen axiales Verschieben, indem er mit seinem der Leitungskupplung 19 entgegengesetzten Gewindefortsatz durch die Lagerbohrungspartie 48 hindurchgesteckt und in die Lagerachse 9 eingeschraubt ist. Gleichzeitig liegt ein an den Verbindungsnippel 33 angeformter radialer Ringbund 51, der größeren Durchmesser als die Lagerbohrungspartie 48 besitzt, an der dem Ringabsatz 49 entgegengesetzten Flanke 50 der Partie 48 mit Gleitspiel an. Somit ist der die Lagerbohrungspartie 48 bildende Trommelkernbereich axial unverschieblich zwischen dem Ringbund 51 und der Lagerachse 8 fixiert. Auf diese Weise erfolgt die axiale Lagefixierung des Trommelkörpers 1 ohne zusätzliches Bauteil.

Der Ringbund 51 könnte bei einer Ausführungsform ohne Verbindungsnippel 33 auch an die Kupplungshälfte 24 selbst unmittelbar angeformt sein.

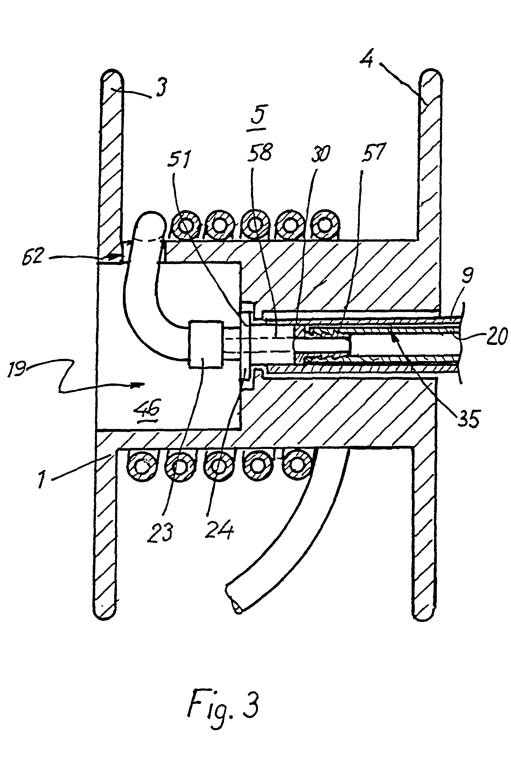

In der eine weitere Ausführungsform der Trommel zeigenden Fig. 3 ist vom Trommelgestell nur die Lagerachse 9 dargestellt, sein restlicher Teil ist weggeschnitten. Der Aufbau des Trommelkörpers 1 ist im wesentlichen identisch, wobei die Flansche 3, 4 hier genau radial vom Trommelkern abstehen.

Im Unterschied zum Ausführungsbeispiel nach den Fig. 1 und 2 ist bei der Trommel gemäß Fig. 3 die Anschlußleitung 20 nicht an das Trommelgestellende anschließbar sondern von diesem Rohrende her in den durchgehenden Rohrkanal 35 bis zur Leitungskupplung 19 eingesteckt und an diese bzw. an deren Kupplungshälfte 24 angeschlossen. Dabei durchzieht die Anschlußleitung 20 beim dargestellten Ausführungsbeispiel die Lagerachse 9 über den größten Teil ihrer Länge und ist mit ihrem Ende auf einen Aufsteckstutzen 57 lösbar aufgesteckt, der koaxial an einem Befestigungsfortsatz 58 der zugeordneten Kupplungshälfte 24 angeformt ist. Diese Kupplungshälfte 24 ist mit dem Befestigungsfortsatz 58 in die hohle Lagerachse 9 eingesteckt, insbesondere eingepreßt, wobei ein an sie angeformter und anhand der Fig. 1 und 2 bereits beschriebener Ringbund 51 die Lagefixierung des Trommelkörpers 1 übernimmt.

Die Anschlußleitung 20 kann auch mit anderen Mitteln an der Kupplungshälfte 24 angebracht sein, z. B. nach Art eines Klemmverschlusses, wie er bei derartigen Schnellkupplungen üblich ist. Ansonsten kann die Leitungskupplung 19 wie schon beschrieben ausgebildet sein.

Ferner muß bei dem Ausführungsbeispiel nach Fig. 3 die Kupplungshälfte 24 nicht unbedingt unmittelbar an der Lagerachse 9 befestigt sein. Zusätzlich zu der anhand der Fig. 1 beschriebenen Variante besteht auch die Möglichkeit, die Kupplungshälfte 24 lose gegenüber der Lagerachse 9 anzuordnen und dabei die Anschlußleitung 20 im durchgehenden Rohrkanal 35 gegen Verdrehen zu sichern. Dies kann durch eine Verengung des Rohrkanals 35 oder bereits allein durch die Formgebung des zusammen mit der Lagerachse 9 einstückig gebogenen Trommelgestells 10 erfolgen.

Die bis zur Leitungskupplung 19 durchgehende Anschlußleitung 20 schützt gleichzeitig das Trommelgestell einschließlich der Lagerachse vor Korrosion.

Die in Fig. 3 dargestellte Wickelleitung 6 ist als Druckluftschlauch ausgebildet, der einen verhältnismäßig kleinen Durchmesser aufweist und gegen Abknicken praktisch unempfindlich ist. Daher kann hier die beim Ausführungsbeispiel nach den Fig. 1 und 2 vorhandene Durchgangsöffnung 44 im Flansch 3 entfallen. Anstelle hiervon kann die Verbindung zwischen dem Aufnahmeraum 46 und dem Wickelraum 5 über eine Radialbohrung 62 erfolgen. Durch die hindurch sich die Leitung 6 erstreckt.

Nachfolgend wird anhand der Fig. 4 noch auf eine Ausführungsform der Leitungskupplung 19 eingegangen, wie sie im Falle einer Kabeltrommel mit einem Elektrokabel als Wickelleitung 6 ausgestaltet sein kann. Der Wickelleitung 6 entsprechend ist auch die Anschlußleitung 20 ein Elektrokabel und durchzieht wie beim Ausführungsbeispiel nach Fig. 3 das Trommelgestell einschließlich der Lagerachse 9. Die Leitungskupplung 19 ist als Schleifringkupplung ausgebildet, indem die einzelnen Kabelstränge 63 der Anschlußleitung 20 über Schleifringe 64 und Schleifschuhe 65 mit der Wickelleitung 6 in Verbindung stehen. Hierbei ist die Kupplungshälfte 24 als in die Lagerachse 9 eingesteckter Schleifringträger 68 ausgebildet, der die mittels Isolierscheiben 66 voneinander getrennten Schleifringe 64 in koaxialer Anordnung trägt. Die in gleicher Anzahl wie die Schleifringe 64 vorhandenen Kabelstränge 63 sind beispielsweise durch Verschraubungen mit den Schleifringen 64 verbunden. Die Schleifschuhe 65 liegen an den Schleifringen 64 an und sind den Schleifringen 64 radial gegenüberliegend am Innenumfang 67 des Aufnahmeraums 46 in radialer Richtung nachgiebig angeordnet. Wie gestrichelt angedeutet ist, sind die Kabelstränge 69 der Wickelleitung 6 lösbar an die Schleifschuhe 65 angeschlossen. Auf diese Weise ist in jeder Drehwinkelstellung des Trommelkörpers gegenüber der Lagerachse eine sichere elektrische Verbindung gewährleistet. Gegebenenfalls wird der Aufnahmeraum 46 durch einen nicht dargestellten Abschlußdeckel verschlossen.

## Patentansprüche

1. Insbesondere tragbare Trommel zum Aufwickeln einer flexiblen Wickelleitung (6) wie Druckluftschlauch, Wasserschlauch, Elektrokabel od.dgl., mit einem einen Trommelkern (2) und seitliche Flansche (3, 4) aufweisenden, drehbar und axial unverschiebbar gelagerten Trommelkörper (1), der einen von dem Trommelkern (2) und den Flanschen (3,4) begrenzten Wickelraum (5) zur Aufnahme der Wickelleitung (6) bildet, und mit einem ein gebogenes Rohr aufweisenden Trommelgestell (10), von dem eine den Trommelkörper (1) lagernde, hohl ausgebildete Lagerachse (9) absteht, an deren dem Trommelgestell (10) abgewandtem Ende eine Leitungskupplung (19) angeordnet ist, die zwei miteinander verbundene, um eine im wesentlichen parallel zur Lagerachse (9) verlaufende Drehachse (29) einander gegenüber verdrehbare Kupplungshälften (23, 24) aufweist, deren eine Kupplungshälfte (24) der Lagerachse (9) gegenüber unverdrehbar angeordnet und über die Lagerachse (9) mit einer Anschlußleitung (20) verbindbar ist und deren andere Kupplungshälfte (23) an die Wickelleitung (6) angeschlossen ist, dadurch gekennzeichnet, daß die Lagerachse (9) ein einstückig abgebogenes Rohrstück des Trommelgestells (10) ist und daß das das Trommelgestell (10) einschließlich der Lagerachse (9) bildende Rohr einen durchgehenden Rohrkanal (35) bildet, wobei die Anschlußleitung (20) entweder an das der Leitungskupplung (19) entgegengesetzte, als Anschluß-Ende ausgebildete Rohrende anschließbar ist oder von diesem Rohrende her in den Rohrkanal (35) bis zur Leitungskupplung (19) eingesteckt und an diese angeschlossen ist.

2. Trommel nach Anspruch 1, dadurch gekennzeichnet, daß bei an das Anschlußende anschließbarer Anschlußleitung das Anschlußende des Trommelgestells (10) einen Anschlußstutzen (37) für die Anschlußleitung (20) trägt.

3. Trommel nach Anspruch 1 oder 2, dadurch gekennzeichnet, daß bei an das Anschlußende anschließbarer Anschlußleitung der Rohrkanal (35) mit einer Schutzschicht ausgekleidet ist, die zweckmäßigerweise von einem den gesamten Rohrkanal (35) durchziehenden Schlauch aus flexiblem Material gebildet wird.

4. Trommel nach Anspruch 1, dadurch gekennzeichnet, daß bei bis zur Leitungskupplung (19) eingesteckter Anschlußleitung (20) die drehfest zur Lagerachse (9) angeordnete Kupplungshälfte (24) einen sich in den Rohrkanal (35) erstreckenden Aufsteckstutzen (58) zum Aufstecken der Anschlußleitung (20) aufweist.

5. Trommel nach Anspruch 1, dadurch gekennzeichnet, daß bei von einem Elektrokabel gebildeter Wickelleitung (6) und bis zur Leitungskupplung (19) eingesteckter Anschlußleitung (20) die Leitungskupplung (19) als Schleifringkupplung ausgebildet ist.

6. Trommel nach einem der Ansprüche 1 bis 5, dadurch gekennzeichnet, daß der der Leitungskupplung (19) entgegengesetzte Endbereich des Trommelgestells (10) als Handgriff (14) ausgebildet ist, der zweckmäßigerweise oberhalb des Trommelkörpers (1) angeordnet ist.

7. Trommel nach einem der Ansprüche 1 bis 6, dadurch gekennzeichnet, daß die an der Lagerachse (9) festgelegte Kupplungshälfte (24) einen radial über die Lagerachse (9) vorstehenden Ringbund (51) als Anschlag für den Trommelkörper (1) bildet.

8. Trommel nach einem der Ansprüche 1 bis 7, dadurch gekennzeichnet, daß die Lagerachse (9) innerhalb einer in die Lagerachse (9) aufnehmenden Lagerbohrung (8) des Trommelkerns (2) endet.

9. Trommel nach Anspruch 7 und 8, dadurch gekennzeichnet, daß die Lagerachse (9) an einem radial nach innen vorstehenden Ringabsatz (48) der Lagerbohrung (8) endet, an dessen entgegengesetzter Seite der Ringbund (51) anliegt.

10. Trommel nach einem der Ansprüche 1 bis 9, dadurch gekennzeichnet, daß die Leitungskupplung (19) in einem stirnseitigen Aufnahmeraum (46) des Trommelkerns (2) angeordnet ist.

11. Trommel nach Anspruch 10, dadurch gekennzeichnet, daß der Aufnahmeraum (46) mit dem Wickelraum (5) durch eine Radialbohrung (62) des Trommelkerns (2) zum Durchstecken der Wickelleitung (6) verbunden ist.

12. Trommel nach einem der Ansprüche 1 bis 10, dadurch gekennzeichnet, daß der der Leitungskupplung (19) zugewandte Trommelkörperflansch (3) eine Durchgangsöffnung zum Durchstecken der Wickelleitung (6) aufweist.

**Claims**

1. A, in particular portable, reel for taking up a flexible reelable line (6), such as a compressed air hose, water hose, power cable etc., with a reel core (2) and a rotatably mounted and axially fixed reel body (1) with lateral flanges (3, 4) forming a reeling space (5) bounded by the reel core (2) and the flanges (3, 4) for the reelable line (6), and with a reel stand (10) having a bent tube, from which projects a hollow bearing arbour (9) supporting the reel body (1) and provided at the end remote from the reel stand (10) with a coupling (19) comprising two half couplings (23, 24) rotatable relative to each other about an axis of rotation (29) substantially parallel to the bearing arbour (9), one half coupling (24) being fixed relative to the bearing arbour (9) and connectable to a connecting line (20) thereby, while the other half coupling (23) is connected to the reelable line (6), characterised in that the bearing arbour (9) is an integrally bent tubular section of the reel stand (10) and in that the reel stand (10) including the tube representing the bearing arbour (9) forms a continuous tubular passage (35), the connecting line (20) either being connected to the tube end remote from the coupling (19) and forming the connecting end or being pushed from this end into the tubular passage (35) up to the coupling (19) and connected thereto.

2. A reel according to Claim 1, characterised in that, if the connecting line is connectable to the connecting end, the connecting end of the reel stand (20) is provided with a connector (37) for the connecting line (20).

3. A reel according to Claim 1 or 2, characterised in that, if the connecting line is connectable to the connecting end, the tubular passage (35) is lined with a protective layer, which is suitably provided by a flexible tube extending through the entire length of the tubular passage (35).

4. A reel according to Claim 1, characterised in that, if the connecting line (20) is inserted up to the coupling (19), the half coupling (24) fixed relative to the bearing arbour (9) is provided with a push-on connector (58) extending into the tubular passage (35) for fitting the connecting line (20).

5. A reel according to Claim 1, characterised in that, if the reelable line (6) is a power cable and the connecting line (20) is inserted up to the coupling (19), the coupling (19) is a slip ring connection.

6. A reel according to any of Claims 1 to 5, characterised in that the end section of the reel stand (10) remote from the coupling (19) is designed as a handle (14) suitably arranged above the reel body (1).

7. A reel according to any of Claims 1 to 6, characterised in that the half coupling (24) fixed to the bearing arbour (9) forms a collar (51) projecting radially beyond the bearing arbour (9) to form a stop for the reel body (1).

8. A reel according to any of Claims 1 to 7, characterised in that the bearing arbour (9) terminates within the bearing bore (8) of the reel core (2) retaining the bearing arbour (9).

9. A reel according to Claims 7 and 8, characterised in that the bearing arbour (9) terminates at an annular shoulder (48) projecting inwards in the bearing bore (8), its other side resting against the collar (51).

10. A reel according to any of Claims 1 to 9, characterised in that the coupling (19) is located in a recess (46) in the end face of the reel core (2).

11. A reel according to Claim 10, characterised in that the recess (46) is connected to the reeling space (5) by a radial bore (62) of the reel core (2) for inserting the reelable line (6).

12. A reel according to any of Claims 1 to 11, characterised in that the reel body flange (3) adjacent to the coupling (19) has an opening for inserting the reelable line (6)

**Revendications**

1. Tambour, en particulier portable, en vue de l'enroulement d'un conduit enroulable flexible (6) tel qu'un flexible à air comprimé, un tuyau à eau, un câble électrique ou objets similaires, comprenant un corps de tambour (1) qui se compose d'un moyeu (2) et de flasques latéraux (3, 4), est monté rotatif sans faculté de déplacement axial, et forme un espace d'enroulement (5) délimité par le moyeu de tambour (2) et par les flasques (3, 4), et destiné à recevoir le conduit enroulable (6) ; et un bâti (10) présentant une tubulure coudée, et dont dépasse un axe de portée (9) de réalisation creuse, assurant le montage du corps de tambour (1) et à l'extrémité duquel, tournée à l'opposé du bâti de tambour (10), est disposé un accouplement (19) de conduits comprenant deux moitiés d'accouplement (23, 24) qui sont reliées l'une à l'autre et peuvent tourner, l'une par rapport à l'autre, autour d'un axe de rotation (29) s'étendant pour l'essentiel parallèlement à l'axe de portée (9), accouplement dont l'une (24) des moitiés est disposée sans faculté de rotation par rapport à l'axe de portée (9), et peut être reliée à un conduit de raccordement (20) par l'intermédiaire de cet axe de portée (9), et dont l'autre moitié d'accouplement (23) est raccordée au conduit enroulable (6), caractérisé par le fait que l'axe de portée (9) est une pièce tubulaire du bâti de tambour (10), cintrée d'un seul tenant ; et par le fait que la tubulure formant le bâti de tambour (10), y compris l'axe de portée (9), matérialise un canal tubulaire ininterrompu (35), le conduit de raccordement (20) pouvant être raccordé à l'extrémité de la tubulure qui est opposée à l'accouplement (19) de conduits, et est réalisée sous la forme d'une extrémité de raccordement, ou bien étant emboîté dans le canal tubulaire (35), à partir de cette extrémité de la tubulure, jusqu'à l'accouplement (19) de conduits auquel il est raccordé.

2. Tambour selon la revendication 1, caractérisé par le fait que, en présence d'un conduit de raccordement pouvant être raccordé à l'extrémité de raccordement, cette extrémité de raccordement du bâti de tambour (10) porte un embout de raccordement (37) pour ledit conduit de raccordement (20).

3. Tambour selon la revendication 1 ou 2, caractérisé par le fait que, en présence d'un conduit de raccordement pouvant être raccordé à l'extrémité de raccordement, le canal tubulaire (35) est revêtu d'une couche protectrice formée, commodément, d'un tuyau en un matériau flexible qui parcourt intégralement ledit canal tubulaire (35).

4. Tambour selon la revendication 1, caractérisé par le fait que, en présence d'un conduit de raccordement (20) emboîté jusqu'à l'accouplement (19) de conduits, la moitié d'accouplement (24), dont la rotation est interdite par rapport à l'axe de portée (9), présente un raccord d'emboîtement (58) s'étendant jusque dans le canal tubulaire (35) en vue de l'emboîtement dudit conduit de raccordement (20).

5. Tambour selon la revendication 1, caractérisé par le fait que, en présence d'un conduit enroulable (6) formé par un câble électrique, et d'un conduit de raccordement (20) emboîté jusqu'à l'accouplement (19) de conduits, cet accouplement (19) de conduits est réalisé sous la forme d'un accouplement à bague coulissante.

6. Tambour selon l'une des revendications 1 à 5, caractérisé par le fait que la région extrême du bâti de tambour (10), opposée à l'accouplement (19) de conduits, est réalisée sous la forme d'une poignée (14) commodément disposée au-dessus du corps de tambour (1).

13

7. Tambour selon l'une des revendications 1 à 6, caractérisé par le fait que la moitié d'accouplement (24) consignée à demeure sur l'axe de portée (9) forme un collet annulaire (51) saillant, radialement, au-delà de l'axe de portée (9) et matérialisant une butée pour le corps de tambour (1).

8. Tambour selon l'une des revendications 1 à 7, caractérisé par le fait que l'axe de portée (9) s'achève à l'intérieur d'un trou de montage (8) du moyeu de tambour (2), recevant ledit axe de portée (9).

9. Tambour selon les revendications 7 et 8, caractérisé par le fait que l'axe de portée (9) s'achève sur un décrochement annulaire (48) du trou de montage (8), qui dépasse radialement vers l'intérieur et contre le côté opposé duquel le collet annulaire (51) est appliqué.

10. Tambour selon l'une des revendications 1 à 9, caractérisé par le fait que l'accouplement (19) de conduits est disposé dans un logement (46) à la face extrême du moyeu de tambour (2).

11. Tambour selon la revendication 10, caractérisé par le fait que le logement (46) est relié à l'espace d'enroulement (5) par l'intermédiaire d'un perçage radial (62) du moyeu de tambour (2), en vue de l'emboîtement traversant du conduit enroulable (6).

12. Tambour selon l'une des revendications 1 à 10, caractérisé par le fait que le flasque (3) du corps de tambour, tourné vers l'accouplement (19) de conduits, présente un orifice de passage en vue de l'emboîtement traversant du conduit enroulable (6).

Fig. 1

Fig. 2

Fig. 4

3

Fig. 3